# EUROPÄISCHE PATENTANMELDUNG

(11) **EP 2 085 844 A1**
(43) Veröffentlichungstag der Anmeldung: **05.08.2009**
(21) Anmeldenummer: 08001137.2
(22) Anmeldetag: 22.01.2008
(51) Int. Cl.: G05B 19/05

(54) **Verfahren zur Steuerung eines Rezeptes eines Chargenprozesses**

(71) Anmelder: SIEMENS AKTIENGESELLSCHAFT, 80333 München (DE)
(72) Erfinder: Rosskopf, Harald, 76327 Pfinztal-Wöschbach (DE)

(57) **Zusammenfassung**

Die Erfindung betrifft ein Verfahren zur Steuerung eines Rezeptes eines Chargenprozesses, das eine erste Rezeptphase (4; 15) und eine Rezeptphasen-Weiterschaltbedingung (5) aufweist, wobei ein der ersten Rezeptphase (4; 15) zugeordneter Funktionsbaustein (14; 15) mittels eines Automatisierungsgerätes abgearbeitet wird und wobei in der ersten Rezeptphase (4) ein erster Soll- und ein erster Istwert (10, 11; 17, 19) hinterlegt wird. Es werden Maßnahmen vorgeschlagen, wodurch im Rahmen einer Rezepterstellung besondere Funktionalitäten grafisch und somit für einen Anwender sichtbar implementiert werden können, ohne dass eine Anpassung eines im Automatisierungsgerät ablaufenden Funktionsbausteins erforderlich ist.

## Beschreibung

Die Erfindung betrifft ein Verfahren zur Steuerung eines Rezeptes eines Chargenprozesses, das eine erste Rezeptphase und eine Rezeptphasen-Weiterschaltbedingung aufweist, wobei ein der ersten Rezeptphase zugeordneter Funktionsbaustein mittels eines Automatisierungsgerätes abgearbeitet wird und wobei in der ersten Rezeptphase ein erster Soll- und ein erster Istwert hinterlegt wird. Ferner betrifft die Erfindung ein Computerprogramm, welches während seines Ablaufs auf einem Programmiergerät in Wirkverbindung mit einem Automatisierungsgerät ein Rezept eines Chargenprozesses steuert, und darüber hinaus ein Programmiergerät mit einem derartigen Computerprogramm.

Ein Computerprogramm zur Verwirklichung eines Verfahrens gemäß dem Oberbegriff des Anspruchs 1 ist aus dem Siemens-Katalog "ST PCS 7 - März 2007", SIMATIC PCS 7, Seite 4/7 und Kapitel 6 bekannt. Ein Anwender erstellt mittels einer so genannten auf einem Programmiergerät ablauffähigen "BATCH Software" grafisch auf einer Anzeigeeinheit ein Rezept zur Steuerung eines Chargenprozesses. Dieses Rezept weist mehrere Rezeptphasen auf, die ausgehend von einem Startpunkt sequentiell durch das Programmiergerät abgearbeitet werden, wobei korrespondierend dazu ein mit dem Programmiergerät online verbundenes Automatisierungsgerät zu jeder Rezeptphase jeweils einen dieser Rezeptphase zugeordneten Funktionsbaustein abarbeitet.
Im Rahmen einer Rezeptphase "Dosieren" kann es nun vorkommen, dass während eines Dosiervorgangs das Automatisierungsgerät lediglich achtzig Stück eines Artikels dosiert, für diese Rezeptphase allerdings im Programmiergerät eine Dosiermenge von beispielsweise einhundert Stück vorgegeben ist. Die dosierte Menge von achtzig Stück (Istwert) übermittelt der Funktionsbaustein des Automatisierungsgerätes der Rezeptphase im Programmiergerät, in welchem dieser Istwert als "bereits dosierte Menge" hinterlegt wird. In diesem Fall ist ein weiterer Dosiervorgang erforderlich, wobei für diesen Vorgang die Rezeptphase dem Automatisierungsgerät als Sollmenge zwanzig Stück übermittelt, welche die Rezeptphase aus der vorgegebenen Dosiermenge von einhundert Stück und der bereits dosierten Menge von achtzig Stück durch eine Differenzbildung ermittelt. Angenommen, während des folgenden Dosiervorgangs dosiert das Automatisierungsgerät lediglich fünfzehn Stück (neuer Istwert), so kommt es im Folgenden zu Störungen der Rezeptphase "Dosieren", falls keine geeigneten Maßnahmen vorgesehen werden; denn der dem Programmiergerät übermittelte neue Istwert von fünfzehn Stück wird wiederum als "bereits dosierte Menge" im Programmiergerät hinterlegt, wodurch die Rezeptphase aus der vorgegebenen Dosiermenge von einhundert Stück und der "neuen", bereits dosierten Menge von fünfzehn Stück (anstatt von fünfundachtzig Stück) einen neuen Sollwert von fünfundachtzig Stück (anstatt von fünf Stück) ermittelt und diesen dem Automatisierungsgerät für einen weiteren Dosiervorgang zuführt. Um eine derartige Störung zu vermeiden, wird gewöhnlich der Funktionsbaustein im Automatisierungsgerät "angepasst". Das bedeutet, dass der Funktionsbaustein der Rezeptphase einen Istwert übermittelt, welchen der Funktionsbaustein durch Summation der Istwerte aus allen durchlaufenen Dosiervorgängen errechnet. Nachteilig ist, dass der Funktionsbaustein nicht mehr universell, sondern lediglich für diesen speziellen Einsatzfall genutzt werden kann. Darüber hinaus muss ein derartiger Baustein mittels einer geeigneten, auf einem Engineering-System ablauffähigen Engineering-Software entsprechend projektiert und schließlich im Automatisierungsgerät implementiert werden.

Der vorliegenden Erfindung liegt die Aufgabe zugrunde, ein Verfahren der eingangs genannten Art zu verbessern. Ferner ist ein Computerprogramm anzugeben, welches während seines Ablaufs auf einem Programmiergerät in Wirkverbindung mit einem Automatisierungsgerät ein Rezept eines Chargenprozesses steuert und zur Verwirklichung eines derartigen Verfahrens geeignet ist. Darüber hinaus ist ein geeignetes Programmiergerät mit einem derartigen Computerprogramm zu schaffen.
Im Hinblick auf das Verfahren wird diese Aufgabe durch die im kennzeichnenden Teil des Anspruchs 1, im Hinblick auf das Computerprogramm durch die im kennzeichnenden Teil des Anspruchs 4 und im Hinblick auf das Programmiergerät durch die im kennzeichnenden Teil des Anspruchs 7 angegebenen Maßnahmen gelöst.

Vorteilhaft ist, dass im Rahmen der Rezepterstellung besondere Funktionalitäten grafisch und somit für einen Anwender sichtbar implementiert werden können, ohne dass eine Anpassung eines im Automatisierungsgerät ablaufenden Funktionsbausteins erforderlich ist.

In einer Ausgestaltung der Erfindung ist vorgesehen, dass die zweite Rezeptphase eine Summierphase ist, mit welcher der Istwert durch Summation von durch das Automatisierungsgerät übermittelten Istwerten ermittelt wird. Mit einer derartigen Summierphase wird sichergestellt, dass einer mehrmals zu durchlaufenden Rezeptphase "Dosieren" stets die bereits dosierte Menge als Istwert bereitgestellt wird.

In einer weiteren Ausgestaltung der Erfindung ist die zweite Rezeptphase eine Inkrementierphase, mit welcher der Istwert aus der Anzahl durchgelaufener Rezeptphasen ermittelt wird. Dadurch ist es möglich, einen Schleifenzähler zu verwirklichen, welcher z. B. im Rahmen eines Färbeprozesses die Anzahl der Färbedurchgänge erfasst, wodurch nach einer vorgebbaren Anzahl von Färbedurchgängen der Färbeprozess zur Schonung des zu färbenden Materials abgebrochen wird.

Weitere vorteilhafte Ausgestaltungen der Erfindung ergeben sich aus den weiteren Unteransprüchen.

Anhand der Zeichnung, in der Ausführungsbeispiele der Erfindung veranschaulicht sind, werden im Folgenden die Erfindung, deren Ausgestaltungen sowie Vorteile näher erläutert.

### Es zeigen:

- Figur 1: einen Funktionsplan eines Chargenprozesses,
- Figur 2 und 3: Datenfluss-Darstellungen zu einem Dosier- und einem Färbeprozess.

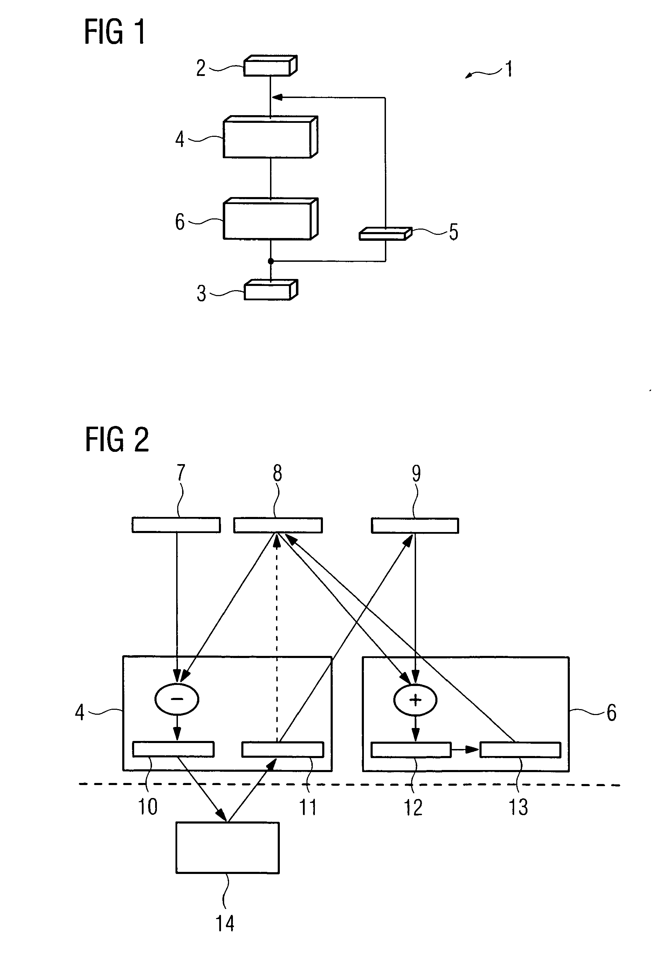

Die in den Figuren 1 bis 3 dargestellten gleichen Teile sind mit gleichen Bezugszeichen versehen.

In Figur 1 ist mit 1 ein Funktionsplan eines Dosierprozesses bezeichnet, wobei dieser Funktionsplan 1 einen Start- und einen Ende-Schritt 2, 3, eine erste Rezeptphase in Form einer Dosierphase 4, eine Weiterschaltbedingung 5 sowie eine der Dosierphase 4 nachgeschaltete zweite Rezeptphase in Form einer Summierphase 6 umfasst. Ein Anwender erstellt den Funktionsplan 1 mittels eines so genannten, an sich bekannten SFC(Sequential Function Chart)-Editors, der auf einem hier nicht dargestellten Programmiergerät ablauffähig ist. Dieses Programmiergerät, das auch zur Erstellung eines der Dosierphase 4 zugeordneten Funktionsbausteins mittels einer geeigneten Engineering-Software vorgesehen sein kann, weist eine Anzeigeeinheit auf, auf welcher der Funktionsplan 1 darstellbar ist. Während der Steuerung des Chargenprozesses arbeitet ein geeignetes Programm des Programmiergerätes den Funktionsplan 1 sequentiell ab, wobei korrespondierend dazu ein mit dem Programmiergerät in Wirkverbindung stehendes Automatisierungsgerät den der Dosierphase 4 zugeordneten Funktionsbaustein abarbeitet und wobei die Dosierphase 4 dem Funktionsbaustein einen Sollwert und der Funktionsbaustein der Dosierphase 4 einen Istwert übermittelt. Der Funktionsbaustein steuert zusammen mit weiterer geeigneter Hard- und Software den Dosiervorgang in einer technischen Anlage, z. B. die Dosierung von Substanzen in der Pharmaindustrie zur Herstellung von Arzneimitteln. Im Unterschied zur Dosierphase 4 ist für die Summierphase 6 kein korrespondierender Funktionsbaustein auf dem Automatisierungsgerät vorgesehen. Diese Summierphase 6 dient lediglich zur Beeinflussung eines von dem zur Dosierphase 6 korrespondierenden Funktionsbaustein erfassten Istwertes.

Zur Verdeutlichung wird in diesem Zusammenhang auf Figur 2 verwiesen, in welcher der Datenfluss während eines Dosiervorgangs zwischen einem Programmiergerät und einem mit diesem Programmiergerät in Wirkverbindung stehenden Automatisierungsgerät dargestellt ist. Es sind lediglich die Teile gezeigt, die zur Verdeutlichung der Erfindung erforderlich sind, wobei die Trennung zwischen den im Programmiergerät und den im Automatisierungsgerät zu bearbeitenden Teilen durch eine gestrichelte Linie gezeigt ist.
Es wird angenommen, dass in einer Parameterliste bzw. in dazu vorgesehenen Speicherzellen des Programmiergerätes eine durch einen Anwender vorgegebene Dosiermenge 7, eine im Rahmen von Dosiervorgängen bereits dosierte Menge 8, deren Anfangswert null ist, sowie eine Istmenge 9, welche während eines Dosiervorgangs ermittelt wird, hinterlegt sind. Ferner wird angenommen, dass einhundert Teile einer Substanz zu dosieren sind, was bedeutet, dass als Dosiermenge 7 der Wert einhundert eingetragen ist und dass die Weiterschaltbedingung 5 die erste und die zweite Rezeptphase 4, 6 so oft durchlaufen lässt, bis einhundert Teile dieser Substanz dosiert sind. Wie gewöhnlich, sind für jede Phase jeweils zwei Speicherzellen oder zwei Gruppen von Speicherzellen zur Hinterlegung eines Soll- und eines Istwertes vorgesehen. Im vorliegenden Ausführungsbeispiel sind für die Dosierphase 4 ein Sollwert mit 10 und ein Istwert mit 11, für die Summierphase 6 ein Sollwert mit 12 und ein Istwert mit 13 bezeichnet. Nach einer Aktivierung des Startschrittes 2 (Figur 1) ermittelt während eines ersten Dosiervorgangs die Dosierphase 4 den Sollwert 12 durch Subtraktion der bereits dosierten Menge 8 von der Dosiermenge 7. Die bereits dosierte Menge 8 ist nach dem Startschritt 2 gleich null, wodurch im vorliegenden Beispiel der Wert der Differenz und somit der Sollwert 12 einhundert ist. Diesen Wert einhundert führt die Dosierphase 4 einem dieser Dosierphase 4 zugeordneten Funktionsbaustein 14 des Automatisierungsgerätes zu, welcher während des aktuellen Dosiervorgangs zusammen mit weiterer geeigneter Hard- und Software einhundert Stück der Substanz zu dosieren beginnt. Es kann nun vorkommen, dass während dieses Dosiervorgangs aufgrund weiterer Abhängigkeitskriterien, z. B. erreichter pH-Wert oder erreichte Viskosität der Substanz, lediglich zwanzig Stück der Substanz dosiert werden können. In diesem Fall sind - wie im Folgenden noch ausgeführt wird - weitere Dosiervorgänge erforderlich. Der Funktionsbaustein 14 im Automatisierungsgerät führt die dosierte Menge von zwanzig Stück der Dosierphase 4 zu, wobei die dosierte Menge als Istwert 11 in dieser Dosierphase 4 hinterlegt wird und wobei das Programmiergerät diesen Istwert 11 als Istmenge 9 des gerade durchgeführten Dosiervorgangs in die Parameterliste und nicht - wie aus dem Stand der Technik bekannt und in der Zeichnung als gepunktete Linie dargestellt - als bereits dosierte Menge 8 speichert.
Die der Dosierphase 4 nachgeschaltete Summierphase 6 beeinflusst den Istwert 11 bzw. die Istmenge 9, indem die Summierphase 6 zu dieser Istmenge 9 die in der Parameterliste hinterlegte bereits dosierte Menge 8 addiert und das Ergebnis als Sollwert 12 hinterlegt. Im vorliegenden Ausführungsbeispiel ist - wie ausgeführt - die Istmenge 9 zwanzig und die bereits dosierte Menge null Stück, so dass der Sollwert 12 zwanzig Stück ist. Dieser Sollwert 12 wird keinem Funktionsbaustein im Automatisierungsgerät übermittelt, sondern direkt in der Summierphase als Istwert 13 hinterlegt. Dieser Istwert 13 wird schließlich in die Parameterliste als "neue", bereits dosierte Menge 8 von zwanzig Stück hinterlegt, wodurch der erste Dosiervorgang abgeschlossen ist. Aufgrund der Weiterschaltbedingung 5 ist ein weiterer Dosiervorgang erforderlich und die Dosier- und die dieser nachgeschaltete Summierphase 4, 6 werden erneut durchlaufen, da die bereits dosierte Menge 8 (zwanzig Stück) kleiner als die Dosiermenge 7 (einhundert Stück) ist.

In der gleichen beschriebenen Art und Weise erfolgen der folgende Dosiervorgang und ggf. weitere Dosiervorgänge so lange, bis die bereits dosierte Menge 8 der Dosiermenge 7 entspricht und daher die Weiterschaltbedingung 5 keinen weiteren Dosiervorgang einleitet.

Für den Fall, dass in einem zweiten Dosiervorgang sechzig, in einem dritten fünfzehn und in einem vierten fünf Stück mittels des Automatisierungsgerätes dosiert werden, ergeben sich Werte gemäß folgender Tabelle:

| Dosiermenge 17 | bereits dosierte Menge 8 | Sollwert 10 der Dosierphase 4 | durch das Automatisierungsgerät dosiert | Istwert 11 der Dosierphase 4 | Istmenge 9 | Sollwert 12 der Summierphase 6 | Istwert 13 der Summierphase 6 |
|---|---|---|---|---|---|---|---|
| 100 | 0 | 100 | 20 | 20 | 20 | 20 | 20 |
| 100 | 20 | 80 | 60 | 60 | 60 | 80 | 80 |
| 100 | 80 | 20 | 15 | 15 | 15 | 95 | 95 |
| 100 | 95 | 5 | 5 | 5 | 5 | 100 | 100 |

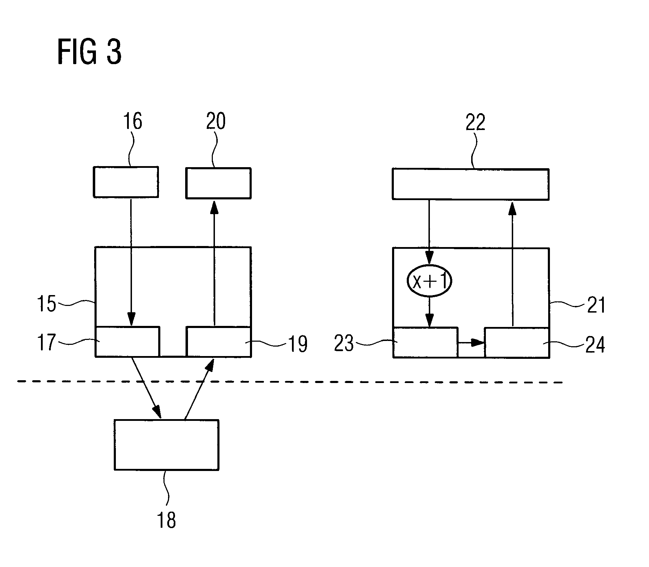

Im Folgenden wird angenommen, dass die erste Rezeptphase 4 gemäß Figur 1 keine Dosierphase sondern eine Färbephase und die zweite Phase 6 keine Summierphase sondern eine Inkrementierphase ist. Diese Inkrementierphase erfasst die Anzahl der Färbedurchgänge, wodurch nach einer vorgebbaren Anzahl von Färbedurchgängen der Färbeprozess zur Schonung des zu färbenden Materials abgebrochen wird. In diesem Zusammenhang wird auf Figur 3 verwiesen, in welcher der Datenfluss eines Färbevorgangs dargestellt ist. Die Trennung zwischen den im Programmiergerät und den im Automatisierungsgerät zu bearbeitenden Teilen ist wiederum durch eine gestrichelte Linie gekennzeichnet, wobei auch hier für jede Phase im Programmiergerät jeweils zwei Speicherzellen oder zwei Gruppen von Speicherzellen zur Hinterlegung eines Soll- und eines Istwertes vorgesehen sind. Einer Färbephase 15 wird eine Soll-Farbe 16 vorgegeben bzw. von einer Parameterliste übermittelt, welche die Färbephase 15 als Sollwert 17 in die dazu vorgesehene Speicherzelle hinterlegt. Diesen Sollwert 17 führt die Färbephase 15 einem mit dieser Phase korrespondierenden Funktionsbaustein 18 des Automatisierungsgerätes zu, welcher - wie erwähnt - zusammen mit weiterer geeigneter Hard- und Software den Färbevorgang steuert, wobei die aktuelle Farbe des Materials ermittelt und diese der Färbephase 15 übermittelt wird. Die aktuelle Farbe des Färbevorgangs hinterlegt die Färbephase 15 als Istwert 19, welcher als aktuelle Ist-Farbe 20 in der Parameterliste gespeichert wird. Es kann nun vorkommen, dass aufgrund des verwendeten Materials lediglich fünf Färbedurchgänge möglich sind. Mehr als fünf Färbedurchgänge würden das Material zu stark strapazieren und die Qualität des Endprodukts vermindern. Die Weiterschaltbedingung 5 ist daher so eingestellt, dass diese neben einem Soll-/Istwertvergleich im Hinblick auf die Farbe (Vergleich der Soll- mit der Ist-Farbe) auch die Anzahl der Färbedurchgänge prüft. Für den Fall, dass die Ist-Farbe der Soll-Farbe entspricht oder bereits fünf Färbedurchgänge durchgeführt wurden, verhindert die Weiterschaltbedingung 5 einen weiteren Färbedurchgang und beendet den Färbeprozess. Um die Anzahl der Färbedurchgänge zu erfassen, ist der Färbephase 15 eine Inkrementierphase 21 nachgeschaltet, welcher ein Zählerstand 22 der Parameterliste zugeführt wird. Dieser wird nach jedem Färbevorgang um eins erhöht und als Sollwert 23 in der Färbephase 21 hinterlegt. In der Färbephase 21 ist kein zu dieser Phase korrespondierender Funktionsbaustein im Automatisierungsgerät zur Beeinflussung des Istwertes vorgesehen, stattdessen wird dieser Sollwert 23 als Istwert 24 übernommen und in die Parameterliste als neuer Zählerstand hinterlegt. Für den Fall, dass der Zählerstand 23 einen Wert fünf erreicht, wird aufgrund der Weiterschaltbedingung 5 der Färbeprozess beendet bzw. abgebrochen.

## Patentansprüche

1. Verfahren zur Steuerung eines Rezeptes eines Chargenprozesses, das eine erste Rezeptphase (4; 15) und eine Rezeptphasen-Weiterschaltbedingung (5) aufweist, wobei
- ein der ersten Rezeptphase (4; 15) zugeordneter Funktionsbaustein (14; 15) mittels eines Automatisierungsgerätes abgearbeitet wird,
- in der ersten Rezeptphase (4) ein erster Soll- und ein erster Istwert (10, 11; 17, 19) hinterlegt wird,
**dadurch gekennzeichnet, dass**
- der ersten Rezeptphase (4; 15) eine mit einem zweiten Soll- und einem zweiten Istwert (12, 13; 23, 24) versehene zweite Rezeptphase (6; 21) nachgeschaltet wird,
- die erste und die zweite Rezeptphase (4, 6; 15, 21) gemäß der Weiterschaltbedingung (5) erneut durchlaufen werden und
- in der zweiten Rezeptphase (6; 21) der Sollwert (12; 23) als Istwert (13; 24) übernommen wird.

2. Verfahren nach Anspruch 1, **dadurch gekennzeichnet, dass** die zweite Rezeptphase (6; 21) eine Summierphase (6) ist.

3. Verfahren nach Anspruch 1, **dadurch gekennzeichnet, dass** die zweite Rezeptphase (6; 21) eine Inkrementierphase (21) ist.

4. Computerprogramm, welches während seines Ablaufs auf einem Programmiergerät in Wirkverbindung mit einem Automatisierungsgerät ein Rezept eines Chargenprozesses steuert, das eine erste Rezeptphase (4; 15) und eine Rezeptphasen-Weiterschaltbedingung (5) aufweist, wobei
- ein der ersten Rezeptphase (4; 15) zugeordneter Funktionsbaustein (14; 15) mittels eines Automatisierungsgerätes abgearbeitet wird,
- das Computerprogramm ermöglicht, in einer ersten Rezeptphase (4) einen ersten Soll- und einen ersten Istwert (10, 11; 17, 19) zu hinterlegen,
**dadurch gekennzeichnet, dass** das Computerprogramm ferner ermöglicht,
- der ersten Rezeptphase (4; 15) eine mit einem zweiten Soll- und einem zweiten Istwert (12, 13; 23, 24) versehene zweite Rezeptphase (6; 21) nachzuschalten,
- die erste und die zweite Rezeptphase (4, 6; 15, 21) gemäß der Weiterschaltbedingung (5) erneut zu durchlaufen und
- in der zweiten Rezeptphase (6; 21) den Sollwert (12; 23) als Istwert (13; 24) zu übernehmen.

5. Computerprogramm nach Anspruch 4, **dadurch gekennzeichnet, dass** das Computerprogramm ermöglicht, die zweite Rezeptphase (6; 21) als eine Summierphase (6) auszubilden.

6. Computerprogramm nach Anspruch 4, **dadurch gekennzeichnet, dass** das Computerprogramm ermöglicht, die zweite Rezeptphase (6; 21) als eine Inkrementierphase (21) auszubilden.

7. Programmiergerät mit einem Computerprogramm, welches während seines Ablaufs auf dem Programmiergerät in Wirkverbindung mit einem Automatisierungsgerät ein Rezept eines Chargenprozesses steuert, das eine erste Rezeptphase (4; 15) und eine Rezeptphasen-Weiterschaltbedingung (5) aufweist, wobei
- ein der ersten Rezeptphase (4; 15) zugeordneter Funktionsbaustein (14; 15) mittels eines Automatisierungsgerätes abgearbeitet wird,
- das Computerprogramm ermöglicht, in einer ersten Rezeptphase (4) einen ersten Soll- und einen ersten Istwert (10, 11; 17, 19) zu hinterlegen,
**dadurch gekennzeichnet, dass** das Computerprogramm ferner ermöglicht,
- der ersten Rezeptphase (4; 15) eine mit einem zweiten Soll- und einem zweiten Istwert (12, 13; 23, 24) versehene zweite Rezeptphase (6; 21) nachzuschalten,
- die erste und die zweite Rezeptphase (4, 6; 15, 21) gemäß der Weiterschaltbedingung (5) erneut zu durchlaufen und
- in der zweiten Rezeptphase (6; 21) den Sollwert (12; 23) als Istwert (13; 24) zu übernehmen.

8. Programmiergerät nach Anspruch 7, **dadurch gekennzeichnet, dass** das Computerprogramm ermöglicht, die zweite Rezeptphase (6; 21) als eine Summierphase (6) auszubilden.

9. Programmiergerät nach Anspruch 7, **dadurch gekennzeichnet, dass** das Computerprogramm ermöglicht, die zweite Rezeptphase (6; 21) als eine Inkrementierphase (21) auszubilden.
